# EUROPÄISCHE PATENTSCHRIFT

(11) **EP 2 153 086 B1**
(45) Veröffentlichungstag und Bekanntmachung des Hinweises auf die Patenterteilung: **24.07.2013**
(21) Anmeldenummer: 08749914.1
(22) Anmeldetag: 30.04.2008
(51) Int. Cl.: F16H 7/08, F16H 7/12

(54) **HYDRAULISCHER RIEMENSPANNER MIT EINEM SPEZIELLEN KOLBEN**
HYDRAULIC BELT TENSIONER COMPRISING A SPECIAL PISTON
TENDEUR À COURROIE HYDRAULIQUE DOTÉ D'UN PISTON PARTICULIER

(30) Priorität: 04.05.2007 DE 102007020885
(43) Veröffentlichungstag der Anmeldung: 17.02.2010
(73) Patentinhaber: Schaeffler Technologies AG & Co. KG, 91074 Herzogenaurach (DE)
(72) Erfinder: HARTMANN, Bernd, 91085 Weisendorf (DE); KOWALSKI, Marco, 91074 Herzogenaurach (DE)
(86) Internationale Anmeldenummer: PCT/EP2008/055323
(87) Internationale Veröffentlichungsnummer: WO 2008/135486

(56) Entgegenhaltungen:
- WO-A-01/81803
- DE-A1- 19 632 383
- DE-A1-102004 047 450

## Beschreibung

Die vorliegende Erfindung betrifft einen hydraulischen Riemenspanner für einen Aggregat- oder Steuertrieb eines Kraftfahrzeuges, mit einem Zylindergehäuse, in dem ein Dämpfungskolben mit Kolbenstange axial gegen die Kraft einer Druckfeder einfahrbar angeordnet ist, wobei Dämpfungsventilmittel im Dämpfungskolben integriert sind, die im Zusammenwirken mit einem im Zylindergehäuse ausgebildeten Druckraum Bestandteil einer in Einfahrrichtung der Kolbenstange wirkenden hydraulischen Dämpfung sind.

Das Einsatzgebiet hydraulischer Riemenspanner erstreckt sich vornehmlich auf den Riementrieb zum Antrieb von Nebenaggregaten, wie Kühlmittelpumpe, elektrischer Generator und Klimakompressor eines Kraftfahrzeuges, welche gewöhnlich am Motor befestigt sind. Die Antriebsenergie liefert die Kurbelwelle des Kraftfahrzeugmotors, wobei der Riementrieb die Antriebsenergie auf Antriebsscheiben der jeweiligen Nebenaggregate überträgt. Mit einem ebenfalls zum Riementrieb gehörenden hydraulischen Riemenspanner wird eine gleichmäßig hohe Riemenspannung sichergestellt, so dass zwischen dem Riemen und den An- oder Abtriebsscheiben möglichst wenig Schlupf entsteht.

Aus der US 4,790,801 geht ein hydraulischer Riemenspanner hervor. Der Riemenspanner besteht hier aus einem Zylindergehäuse, in welchem ein nach Art eines Plungerkolbens ausgebildeter Dämpfungskolben ein- und ausfahrbar hinein ragt. Umgeben wird diese Kolben-Zylinder-Anordnung von einer Druckfeder, welche die beiden Teile in die ausgefahrene Ausgangsposition bringt. Während zwischen dem Dämpfungskolben und dem Zylindergehäuse ein Druckraum einer hydraulischen Dämpfung gebildet ist, wird die Kolben-Zylinder-Anordnung von einem weiteren, äußeren becherartigen Gehäuseteil umgeben, dessen ringförmiger Innenraum den drucklosen Vorratsraum der hydraulischen Dämpfung bildet. Die Einfahrbewegung des Dämpfungskolbens erfolgt hier gedämpft, indem das im Druckraum vorhandene Dämpfungsöl über bodenseitig des Zylindergehäuses integrierte Drosselmittel in den Vorratsraum gelangt. Dies erfolgt je nach wirksamem Drosselquerschnitt entsprechend gedämpft. Dagegen wirkt für die Ausfahrbewegung des Dämpfungskolbens ein Rückschlagventil, so dass diese im Wesentlichen ungedämpft erfolgt. Die bodenseitig im Zylindergehäuse angeordneten Dämpfungsventilmittel bestehen im Wesentlichen aus einer druckfederbelastet innerhalb eines Käfigs angeordneten Ventilkugel, die gegen einen Ventilsitz drückt, um das Rückschlagventil zu realisieren. Nachteilig bei dieser Lösung erscheint der relativ hohe Montageaufwand, denn insbesondere die Dämpfungsventilmittel sind bodenseitig des Zylindergehäuses zu montieren, was ein entsprechend geteiltes Zylindergehäuse voraussetzt.

Die US 6,036,612 offenbart einen gattungsgemäßen hydraulischen Riemenspanner, bei dem im Unterschied zu dem vorstehend erläuterten Stand der Technik die Dämpfungsventilmittel seitens des Dämpfungskolbens integriert sind. Der Dämpfungskolben besteht aus einem massiven Gussteil und weißt eine zentrale Drosselbohrung auf, welche einen im Zylindergehäuse ausgebildeten bodenseitigen Druckraum mit einem kolbenstangenseitigen Vorratsraum der hydraulischen Dämpfung verbindet. Auch hier ist ein Rückschlagventil in Form einer gegen einen Ventilsitz drückenden Ventilkugel gebildet. Zwar lassen sich die in dem Dämpfungskolben integrierten Dämpfungsventilmittel im Dämpfungskolben vormontieren, bevor das Zusammenfügen mit dem Zylindergehäuse erfolgt, jedoch haben bei dieser Lösung Fertigungsungenauigkeiten des massiv ausgebildeten Dämpfungskolbens einen negativen Einfluss auf die Dämpfungswirkung. Weiterhin stellt sich bei einer solchen technischen Lösung eine Dämpfkraft ein, welche proportional zur Kolbengeschwindigkeit ist. Diese kann bei ungünstigen Betriebsbedingungen, wie niedrigen Temperaturen, sehr groß werden, was zu erheblichen Aggregatbelastungen führt.

Die gattungsgemäße 10 2004 047 450 A1 zeigt darüber hinaus ein hydraulisches Spannelement mit einem Zylinder und einem Kolben, wobei dem Kolben stirnseitig eine Ventilbaugruppe zugeordnet ist, über welche der Volumenaustausch des Hydraulikfluids erfolgt. Der Kolben ist über einen druckraumseitigen Führungsabschnitt in den Zylinder geführt und über eine in einer Ringnut des Führungsabschnitts eingesetzte Dichtung abgedichtet. Die Ventilbaugruppe ist dabei als ein separates Bauteil mit einem radial abgesetzten Bereich in einen rohrförmigen Abschnitt des Kolbens eingepresst.

Es ist die Aufgabe der vorliegenden Erfindung einen hydraulischen Riemenspanner zu schaffen, der einfach konstruiert ist und sich in gleichbleibender Qualität reproduzieren lässt, und der bei ungünstigen Betriebsbedingungen in etwa gleichbleibende Dämpfkräfte realisiert.

Die Aufgabe wird ausgehend von einem hydraulischen Riemenspanner gemäß dem Obergriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die im Innenraum des Dämpfungskolbens untergebrachten Dämpfungsventilmittel durch eine nach radialinnen umgebördelte, bodenseitige Kante des Dämpfungskolbens fixiert sind.

Der Vorteil der erfindungsgemäßen Lösung liegt insbesondere darin, dass sich durch moderne Fertigungstechniken ein Dämpfungskolben als Stanzbiegeteil erzeugen lässt, der bereits fertigungsbedingt enge Bauteiltoleranzen aufweist. Der Dämpfungskolben wird durch das Zylindergehäuse geführt, d.h. zwischen Dämpfungskolben und Zylindergehäuse besteht kein Drosselspalt. Die Drosselung sowie auch die Rückschlagventilfunktion der Dämpfungsventilmittel wird dagegen durch im Innenraum des Dämpfungskolbens angeordnete Bauteile gebildet. Diese Bauteile lassen sich ebenfalls mit relativ geringem fertigungstechnischen Aufwand größtenteils als Stanzbiegeteile aus Blech herstellen.

So können die Dämpfungsventilmittel beispielsweise einen bodenseitig des Dämpfungskolbens angeordneten Ringkörper umfassen, in welchem Drossel- oder Laminarspaltöffnungen eingebracht sind, um die Dämpfungsfunktion zu erfüllen.

Zur Dämpfkraftbegrenzung wird gemäß einer weiteren die Erfindung verbessernden Maßnahme vorgeschlagen, eine Druckfeder zu verwenden, die die nach radialinnen umgebördelte bodenseitige Kante des Dämpfungskolbens als Ventilplatte gegen den einen Ventilsitz bildenden Körper andrückt. Solange der Druck im Druckraum kleiner ist als die Vorspannkraft dieser Druckfeder ist das Ventil geschlossen und ab einem durch die Vorspannkraft der Druckfeder definierten Grenzdruck öffnet das Ventil zwecks Dämpfkraftbegrenzung. Um die Druckfeder ebenfalls platzsparend im Innenraum des Dämpfungskolbens zu integrieren wird vorgeschlagen, diese nach Art einer Wellfeder oder Tellerfeder auszubilden. Das Dämpfungsöl kann dabei durch die Well- oder Tellerfeder hindurch, d.h. durch deren kreisförmige Öffnung, zwischen dem Druckraum und einem in der Kolbenstange ausgebildeten Vorratsraum hin- und herströmen.

Das weiterhin zu den Dämpfungsventilmitteln gehörige Rückschlagventil umfasst vorzugsweise eine über eine Druckfeder beaufschlagte und gegen eine Ventilsitzscheibe drückende Ventilplatte, so dass Dämpfungsöl bei einer Ausfahrbewegung der Kolbenstange vom Vorratsraum in den Druckraum möglichst ungedrosselt gelangen kann. Auch die Bestandteile des Rückschlagventils lassen sich als Stanzbiegteile aus Blech fertigen.

Gemäß einer weiteren, die Erfindung verbessernden Maßnahme ist vorgesehen, dass über die Dimensionierung der Innenraumhöhe des Dämpfungskolbens die Federvorspannung der Druckfeder zur Dämpfkraftbegrenzung in einfacher Weise einstellbar ist.

Weiterhin wird vorgeschlagen, die Führung der Kolbenstange relativ zum Zylindergehäuse über einen öffnungsseitig des Zylindergehäuses eingesetzten Führungsring zu gewährleisten, der im Sinne einer Funktionsintegration gleichzeitig auch zur Bildung eines oberen Endanschlages für den Dämpfungskolben dient. Somit ist der bewegliche Teil des hydraulischen Riemenspanners an zwei Punkten, nämlich durch den Führungsring und durch zwei Punkten, nämlich durch den Führungsring und durch den Dämpfungskolben, entlang seiner Arbeitsbewegung stabil gestützt und statisch bestimmt geführt.

Zwecks Abdichtung des dämpfungsölbefüllten Innenraums des Zylindergehäuses gegenüber der Umgebung kann der Führungsring selbst innenradiale Dichtmittel mit umfassen. Alternativ hierzu ist es jedoch auch möglich, an der dem Dämpfungskolben gegenüberliegenden Seite des Führungsrings einen separaten Dichtring zur dynamischen Abdichtung der Kolbenstange vorzusehen.

Gemäß einer anderen die Erfindung verbessernden Maßnahme kann der Dämpfungskolben als ein gegenüber der Kolbenstange separates Bauteil ausgeführt sein. In diesem Falle wird vorgeschlagen, den Dämpfungskolben über einen Rohrabschnitt in die rohrförmige Kolbenstange einzupressen, wobei ein nach radial außen umgebördelter Rand der Kolbenstange mit dem zylindergehäuseseitigen Führungsring in Kontakt kommt. Der umgebördelte Rand der Kolbenstange stößt somit gegen den zylindergehäuseseitigen und damit ortsfesten Führungsring, so dass der obere Endanschlag ohne Beeinträchtigung der Pressverbindung mit dem Dämpfungskolben realisiert ist.

Weitere, die Erfindung verbessernde Maßnahmen werden nachstehend gemeinsam mit der Beschreibung eines bevorzugten Ausführungsbeispiels anhand der Figuren näher dargestellt. Es zeigt:
- Fig.1: eine Seitenansicht in Schnittdarstellung eines hydraulischen Riemenspanners,
- Fig.2: eine Detailvergrößerung des Riemenspanners nach Fig.1 im Bereich des Dämpfungskolbens, und
- Fig.3: eine alternative Ausführungsform eines Dämpfungskolbens im Zusammenwirken mit einer Kolbenstange.

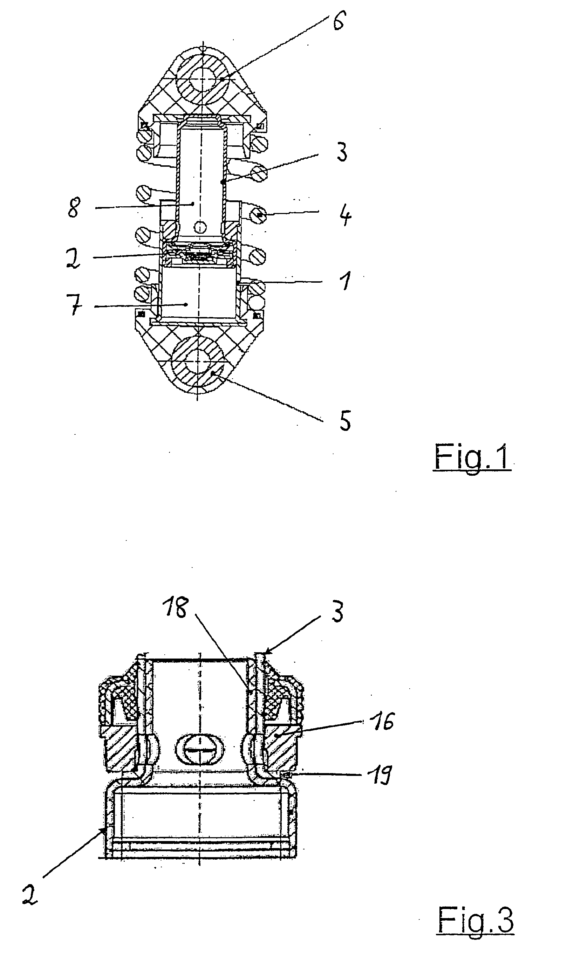

Gemäß Fig.1 weist der hydraulische Riemenspanner ein Zylindergehäuse 1 auf, in welchem ein Dämpfungskolben 2 mit hiervon ausgehender Kolbenstange 3 von einer Stirnseite her hineinragt. Eine zwischen dem Zylindergehäuse 1 und dem Dämpfungskolben 2 samt Kolbenstange 3 wirkende Druckfeder 4 bringt den Dämpfungskolben 2 in eine ausgefahrene Grundposition.

Zur Montage des hydraulischen Riemenspanners weist dieser einen ortsfest zum Zylindergehäuse 1 ausgebildeten ersten Befestigungsflansch 5 sowie einen ortsfest zur Kolbenstange 3 ausgebildeten zweiten Befestigungsflansch 6 auf.

Bei dem hydraulischen Riemenspanner sind die Dämpfungsventilmittel im Dämpfungskolben 2 integriert, der im Zusammenwirken mit dem Zylindergehäuse 1 einen Druckraum 7 bildet. Dagegen befindet sich auf der gegenüberliegenden Seite des Dämpfungskolbens 2, integriert in die Kolbenstange 3, ein Vorratsraum 8 für Dämpfungsöl.

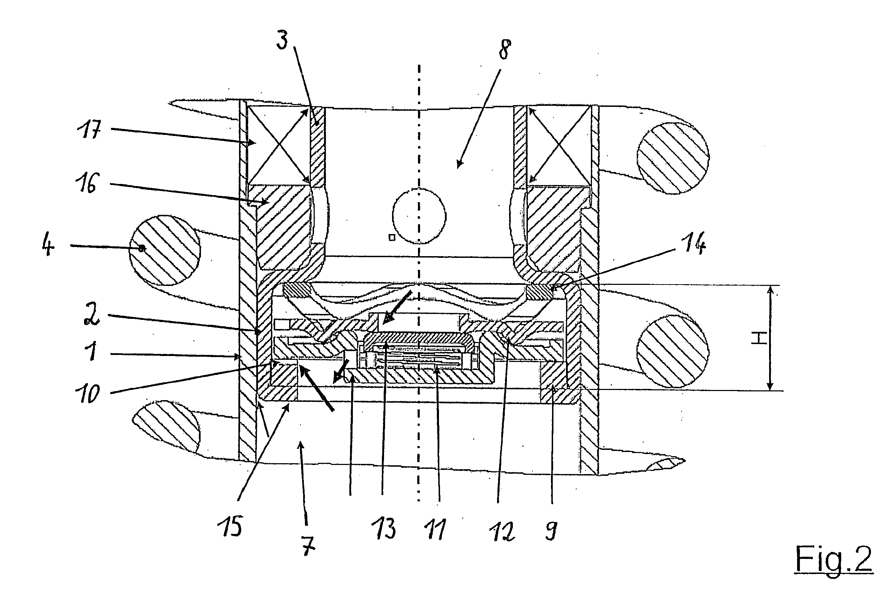

Gemäß Fig.2 ist der Dämpfungskolben 2 aus einem Blechumformteil hergestellt und mit einem engen Führungsspiel im Zylindergehäuse 1 geführt. Im Innenraum des Dämpfungskolbens 2 sind Dämpfungsventilmittel angeordnet, welche nach Art eines Drosselrückschlagventils funktionieren.

Zur Drosselung ist ein bodenseitig des Dämpfungskolbens 2 angeordneter Ringkörper 9 vorgesehen. In den Ringkörper 9 sind Laminarspaltöffnungen 10 eingebracht, die während der Einfahrbewegung der Kolbenstange 3 eine Drosselung bewirken, in dem Dämpfungsöl gedrosselt vom Druckraum 7 in den Vorratsraum 8 gelangt.

Die Dämpfungsventilmittel umfassen weiterhin ein Rückschlagventil, das eine über eine Druckfeder 11 beaufschlagte und gegen eine Ventilsitzscheibe 12 drückende Ventilplatte 13 aufweist. Das Dämpfungsöl kann somit bei einer Ausfahrbewegung der Kolbenstange 3 weitgehend ungedrosselt vom Vorratsraum 8 in den Druckraum 7 gelangen.

Ferner umfassen die Dämpfungsventilmittel auch eine Dämpfkraftbegrenzung, die eine nach Art einer Wellfeder ausgebildete Druckfeder 14 aufweist, welche eine nach innen umgebördelte bodenseitige Kante 15 des Dämpfungskolbens 2 als Ventilplatte gegen den einen Ventilsitz bildenden Ringkörper 9 andrückt. Solange der Druck im Druckraum 7 kleiner ist als die von der Druckfeder 14 ausgeübte Vorspannkraft, bleibt diese Dämpfkraftbegrenzung geschlossen. Die Dämpfkraftbegrenzung öffnet erst, wenn der Druck im Druckraum 7 entsprechend höher wird.

Die vorstehend beschriebenen, im Innenraum des Dämpfungskolbens 2 untergebrachten Dämpfungsventilmittel werden dort durch die innen umgebördelte bodenseitige Kante 15 des Dämpfungskolbens 2 fixiert.

Im Zylindergehäuse 1 ist ferner ein Führungsring 16 eingepresst, welcher zur Führung der Kolbenstange 3 sowie auch zur Bildung eines oberen Endanschlags für den Dämpfungskolben 2 dient. An der dem Dämpfungskolben 2 gegenüberliegenden Seite des Führungsrings 16 ist ein Dichtring 17 eingepresst. Der Dichtring 17 dient der dynamischen Abdichtung der Kolbenstange 3 während der Ein- und Ausfahrbewegung.

Die Fig.3 stellt einen zweiteiligen Aufbau der aus Dämpfungskolben 2 und Kolbenstange 3 bestehenden Baueinheit dar. Der Dämpfungskolben 2 ist hierbei über einen Rohrabschnitt 18 in die rohrförmige Kolbenstange 3 eingepresst. Hierbei wirkt ein außenradial an der Kolbenstange 3 umgebördelter Rand 19 mit dem zylindergehäuseseitigen Führungsring 16 zwecks Bildung eines Endanschlags zusammen.

### Bezugszeichenliste

- 1: Zylindergehäuse
- 2: Dämpfungskolben
- 3: Kolbenstange
- 4: Druckfeder
- 5: erster Befestigungsflansch
- 6: zweiter Befestigungsflansch
- 7: Druckraum
- 8: Vorratsraum
- 9: Ringkörper
- 10: Laminarspaltöffnung
- 11: Druckfeder
- 12: Ventilsitzscheibe
- 13: Ventilplatte
- 14: Druckfeder
- 15: Kante
- 16: Führungsring
- 17: Dichtring
- 18: Rohrabschnitt
- 19: Rand

## Patentansprüche

1. Hydraulischer Riemenspanner für einen Aggregate- oder Steuertrieb eines Kraftfahrzeuges, mit einem Zylindergehäuse (1), in dem ein Dämpfungskolben (2) mit Kolbenstange (3) axial gegen die Kraft einer Druckfeder (4) einfahrbar angeordnet ist, wobei Dämpfungsventilmittel im Dämpfungskolben (2) integriert sind, die im Zusammenwirken mit einem im Zylindergehäuse (1) ausgebildeten Druckraum (7) Bestandteil einer in Einfahrrichtung der Kolbenstange (3) wirkenden hydraulischen Dämpfung sind, und wobei der Dämpfungskolben (2) aus einem Blechumformteil hergestellt ist, das mit einem engen Führungsspiel im Zylindergehäuse (1) geführt ist, wobei der Innenraum des Dämpfungskolbens (2) eine Aufnahme für als Drosselrückschlagventil ausgebildete Dämpfungsventilmittel bildet und wobei ortsfest im Zylindergehäuse (1) ein Führungsring (16) angeordnet ist, der sowohl zur Bildung eines oberen Endanschlags für den Dämpfungskolben (2) dient als auch die Führung der Kolbenstange (3) relativ zum Zylindergehäuse (1) gewährleistet, wobei der bewegliche Teil des Riemenspanners entlang seiner Arbeitsbewegung durch den Führungsring (16) und den Dämpfungskolben (2) stabil gestützt ist, und **dadurch gekennzeichnet, dass** die im Innenraum des Dämpfungskolbens (2) untergebrachten Dämpfungsventilmittel durch eine nach radial innen umgebördelte bodenseitige Kante (15) des Dämpfungskolbens (2) fixiert sind.

2. Hydraulischer Riemenspanner nach Anspruch 1, **dadurch gekennzeichnet, dass** die Dämpfungsventilmittel in einem bodenseitig des Dämpfungskolbens (2) angeordneten Ringkörper (9) eingebrachte Drossel- oder Laminarspaltöffnungen (10) umfassen.

3. Hydraulischer Riemenspanner nach Anspruch 1, **dadurch gekennzeichnet, dass** die Dämpfungsventilmittel zur Dämpfkraftbegrenzung eine Druckfeder (14) umfassen, die die Kante (15) des Dämpfungskolbens (2) gegen den einen Ventilsitz bildenden Ringkörper (9) andrückt, solange der Druck im Druckraum (7) kleiner als die Vorspannkraft der Druckfeder (14) ist.

4. Hydraulischer Riemenspanner nach Anspruch 3, **dadurch gekennzeichnet, dass** die Druckfeder (14) nach Art einer Wellfeder oder Tellerfeder ausgebildet ist, durch welche das Dämpfungsöl zwischen dem Druckraum (7) und einem in der Kolbenstange (3) ausgebildeten Vorratsraum (8) strömt.

5. Hydraulischer Riemenspanner nach Anspruch 3 oder 4, **dadurch gekennzeichnet, dass** über die Dimensionierung der Innenraumhöhe (H) des Dämpfungskolbens (2) die Federvorspannung der Druckfeder (14) einstellbar ist.

6. Hydraulischer Riemenspanner nach Anspruch 1, **dadurch gekennzeichnet, dass** die Dämpfungsventilmittel als Rückschlagventil eine über eine Druckfeder (11) beaufschlagte und gegen eine Ventilsitzscheibe (12) drückende Ventilplatte (13) umfassen, so dass Dämpfungsöl bei einer Ausfahrbewegung der Kolbenstange (3) vom Vorratsraum (8) in den Druckraum (7) gelangt.

7. Hydraulischer Riemenspanner nach Anspruch 1, **dadurch gekennzeichnet, dass** an der dem Dämpfungskolben (2) gegenüberliegenden Seite des Führungsrings (16) ein Dichtring (17) zur dynamischen Abdichtung der Kolbenstange (3) angeordnet ist.

8. Hydraulischer Riemenspanner nach einem der vorstehenden Ansprüche, **dadurch gekennzeichnet, dass** der Dämpfungskolben (2) als ein gegenüber der Kolbenstange (3) separates Bauteil ausgeführt ist, das über einen Rohrabschnitt (18) in die rohrförmige Kolbenstange (3) eingepresst ist, wobei ein nach radial außen umgebördelter Rand (19) der Kolbenstange (3) mit dem zylindergehäuseseitigen Führungsring (16) zur Bildung eines Endanschlages in Kontakt kommt.

## Claims

1. Hydraulic belt tensioner for a unit drive or control drive of a motor vehicle, with a cylinder housing (1) in which a damping piston (2) with a piston rod (3) is arranged in a manner such that it can be retracted axially counter to the force of a compression spring (4), wherein damping valve means are integrated in the damping piston (2), said damping valve means, in interaction with a pressure space (7) formed in the cylinder housing (1), being part of a hydraulic damping means acting in the retraction direction of the piston rod (3), and wherein the damping piston (2) is produced from a sheet-metal formed part which is guided in the cylinder housing (1) with a narrow guiding clearance, wherein the interior of the damping piston (2) forms a receptacle for damping valve means which are in the form of a one-way restrictor and wherein a guide ring (16) is arranged in a positionally fixed manner in the cylinder housing (1), which guide ring both serves for forming an upper end stop for the damping piston (2) and ensures that the piston rod (3) is guided relative to the cylinder housing (1), wherein the movable part of the belt tensioner is supported in a stable manner along its working movement by the guide ring (16) and the damping piston, **characterized in that** the damping valve means which are accommodated in the interior of the damping piston (2) are fixed by means of a radially inwardly crimped, bottom edge (15) of the damping piston (2).

2. Hydraulic belt tensioner according to Claim 1, **characterized in that** the damping valve means comprise restricting or laminar gap openings (10) placed in an annular body (9) arranged on the bottom of the damping piston (2).

3. Hydraulic belt tensioner according to Claim 1, **characterized in that** the damping valve means for limiting the damping force comprise a compression spring (14) which presses the edge (15) of the damping piston (2) against the annular body (9), which forms a valve seat, for as long as the pressure in the pressure space (7) is lower than the prestressing force of the compression spring (14).

4. Hydraulic belt tensioner according to Claim 3, **characterized in that** the compression spring (14) is formed in the manner of an undulated spring or disk spring through which the damping oil flows between the pressure space (7) and a storage space (8) formed in the piston rod (3).

5. Hydraulic belt tensioner according to Claim 3 or 4, **characterized in that** the prestressing of the compression spring (14) can be set via the dimensioning of the interior height (H) of the damping piston (2).

6. Hydraulic belt tensioner according to Claim 1, **characterized in that** the damping valve means in the form of a non-return valve comprise a valve plate (13) which is acted upon by a compression spring (11) and presses against a valve seat disk (12) such that, during an extension movement of the piston rod (3), damping oil passes from the storage space (8) into the pressure space (7).

7. Hydraulic belt tensioner according to Claim 1, **characterized in that** a sealing ring (17) for the dynamic sealing of the piston rod (3) is arranged on that side of the guide ring (16) which lies opposite the damping piston (2).

8. Hydraulic belt tensioner according to one of the preceding claims, **characterized in that** the damping piston (2) is designed as a component which is separate from the piston rod (3) and is pressed into the tubular piston rod (3) via a tube section (18), a radially outwardly crimped border (19) of the piston rod (3) coming into contact with the guide ring (16) on the cylinder housing in order to form an end stop.

## Revendications

1. Tendeur de courroie hydraulique pour un entraînement de groupes ou de commande d'un véhicule automobile, avec une enceinte de cylindre (1), dans laquelle un piston d'amortissement (2) avec une tige de piston (3) peut être introduit axialement contre la force d'un ressort de pression (4), dans lequel des moyens de soupape d'amortissement sont intégrés dans le piston d'amortissement (2), qui font partie, en coopération avec une chambre de pression (7) formée dans l'enceinte de cylindre (1), d'un amortissement hydraulique agissant dans la direction d'introduction de la tige de piston (3), et dans lequel le piston d'amortissement (2) est fabriqué en une pièce de tôle déformée, qui est guidée dans l'enceinte de cylindre (1) avec un jeu de guidage étroit, dans lequel l'espace intérieur du piston d'amortissement (2) forme un logement pour des moyens de soupape d'amortissement sous la forme d'un clapet anti-retour avec étranglement, et dans lequel une bague de guidage (16) est disposée de façon fixe dans l'enceinte de cylindre (1) et sert d'une part pour la formation d'une butée d'extrémité supérieure pour le piston d'amortissement (2) et garantit d'autre part le guidage de la tige de piston (3) par rapport à l'enceinte de cylindre (1), dans lequel la partie mobile du tendeur de courroie est supportée de façon stable le long de sa course de travail par la bague de guidage (16) et le piston d'amortissement (2), **caractérisé en ce que** les moyens de soupape d'amortissement installés dans l'espace intérieur du piston d'amortissement (2) sont fixés par un bord côté fond (15) du piston d'amortissement (2) replié radialement vers l'intérieur.

2. Tendeur de courroie hydraulique selon la revendication 1, **caractérisé en ce que** les moyens de soupape d'amortissement comprennent des ouvertures à fente laminaire ou d'étranglement (10) pratiquées dans un corps annulaire (9) disposé du côté du fond du piston d'amortissement (2).

3. Tendeur de courroie hydraulique selon la revendication 1, **caractérisé en ce que** les moyens de soupape d'amortissement comprennent, pour la limitation de la force d'amortissement, un ressort de pression (14) qui pousse le bord (15) du piston d'amortissement (2) contre le corps annulaire (9) formant un siège de soupape, aussi longtemps que la pression dans la chambre de pression (7) est inférieure à la force de précontrainte du ressort de pression (14).

4. Tendeur de courroie hydraulique selon la revendication 3, **caractérisé en ce que** le ressort de pression (14) est réalisé à la manière d'une rondelle ondulée ou d'une rondelle Belleville, à travers laquelle l'huile d'amortissement s'écoule entre la chambre de pression (7) et une chambre de stockage (8) formée dans la tige de piston (3).

5. Tendeur de courroie hydraulique selon la revendication 3 ou 4, **caractérisé en ce que** la précontrainte élastique du ressort de pression (14) est réglable par le dimensionnement de la hauteur d'espace intérieur (H) du piston d'amortissement (2).

6. Tendeur de courroie hydraulique selon la revendication 1, **caractérisé en ce que** les moyens de soupape d'amortissement comprennent comme clapet anti-retour une plaque de soupape (13) poussée par un ressort de pression (11) et pressant contre un disque de siège de soupape (12), de telle manière que l'huile d'amortissement passe de la chambre de stockage (8) dans la chambre de pression (7) lors d'un mouvement de sortie de la tige de piston (3).

7. Tendeur de courroie hydraulique selon la revendication 1, **caractérisé en ce qu'**une bague d'étanchéité (17) est disposée sur le côté de la bague de guidage (16) opposé au piston d'amortissement (2) pour l'étanchéité dynamique de la tige de piston (3).

8. Tendeur de courroie hydraulique selon l'une quelconque des revendications précédentes, **caractérisé en ce que** le piston d'amortissement (2) est réalisé sous la forme d'une pièce séparée par rapport à la tige de piston (3), qui est pressée dans la tige de piston tubulaire (3) au moyen d'une partie tubulaire (18), dans lequel un bord de la tige de piston (3) replié radialement vers l'extérieur (19) vient en contact avec la bague de guidage côté enceinte de cylindre (16) pour la formation d'une butée d'extrémité.
